# FASCICULE DE BREVET EUROPEEN

(11) **EP 3 141 441 B1**
(45) Date de publication et mention de la délivrance du brevet: **13.02.2019**
(21) Numéro de dépôt: 16186491.3
(22) Date de dépôt: 31.08.2016
(51) Int. Cl.: B60S 1/56, G02B 27/00

(54) **DISPOSITIF DE NETTOYAGE D'UN SYSTÈME DE DÉTECTION ÉQUIPANT UN VÉHICULE AUTOMOBILE**
REINIGUNGSVORRICHTUNG EINES DETEKTIONSSYSTEMS AN BORD EINES KRAFTFAHRZEUGS
DEVICE FOR CLEANING A DETECTION SYSTEM PROVIDED IN A MOTOR VEHICLE

(30) Priorité: 14.09.2015 FR 1558568
(43) Date de publication de la demande: 15.03.2017
(73) Titulaire: Valeo Systèmes d'Essuyage, 78322 Le Mesnil Saint Denis (FR)
(72) Inventeur: GRASSO, Giuseppe, 63340 Le Breuil sur Couze (FR); TREBOUET, Marcel, 78450 CHAVENAY (FR)
(74) Mandataire: Callu-Danseux, Violaine

(56) Documents cités:
- WO-A1-2016/074933
- DE-A1-102014 200 097
- US-A1- 2011 073 142
- US-A1- 2013 048 036
- US-A1- 2013 209 079

## Description

Le domaine de la présente invention est celui des systèmes de détection de l'environnement d'un véhicule automobile et destinés à équiper un tel véhicule. Elle a pour objet un dispositif de nettoyage d'un tel système de détection. Elle a aussi pour objet un procédé de mise en oeuvre d'un tel dispositif de nettoyage.

Un véhicule automobile est équipé d'un système de détection pour recueillir des informations sur un environnement du véhicule automobile. De telles informations sont par exemple utiles pour aider un conducteur du véhicule automobile à conduire et/ou à manoeuvrer en sécurité le véhicule automobile. Le système de détection est notamment installé sur une face avant ou une face arrière du véhicule automobile pour collecter des informations respectivement sur un environnement frontal ou un environnement arrière au véhicule automobile. Le système de détection est par exemple encore installé sur un rétroviseur équipant le véhicule automobile.

La face avant, la face arrière et le rétroviseur reçoivent fréquemment des salissures, telles que de l'eau sale, des poussières et autres types de projections, qui sont susceptibles de se déposer et de s'accumuler sur le système de détection. De telles salissures forment un obstacle à une émission et à une réception des informations et peuvent perturber un fonctionnement du système de détection, de telle sorte que la collecte d'informations est susceptible d'être erronée voire impossible. Le document US2013/048036 décrit par exemple un système de nettoyage d'un tel système de détection. En revanche, il n'existe pas de système de nettoyage adapté à un système de détection comprenant une zone d'émission d'un signal et une zone de réception de ce signal.

Un but de la présente invention est de proposer un système de détection qui est apte à recueillir des informations sur un environnement du véhicule automobile, d'une manière pérenne, y compris en cas de projections de salissures sur le système de détection.

Un système de la présente invention est un système de détection destiné à équiper un véhicule automobile. Le système de détection selon l'invention comprend au moins un détecteur laser délimité par au moins une face optique, le système de détection comprenant au moins un dispositif de nettoyage de la face optique, le dispositif de nettoyage comprenant une rampe de nettoyage mobile le long d'un chemin disposé au moins en vis-à-vis de la face optique, le système de détection comprenant en outre au moins un organe de guidage du dispositif de nettoyage de la face optique, cet organe de guidage étant un chemin de came et/ou une paroi courbée.

Le système de détection comprend avantageusement au moins une des caractéristiques suivantes prise seule ou en combinaison :
- le chemin forme une surface parallèle à la face optique, avantageusement homothétique à la face optique,
- la face optique est délimitée par un deuxième secteur angulaire, la rampe de nettoyage étant mobile entre une première position et une deuxième position, au moins la première position étant située dans un premier secteur angulaire complémentaire du deuxième secteur angulaire,
- la rampe de nettoyage est mobile entre une première position dans laquelle la rampe de nettoyage est placée à l'aplomb d'un premier bord latéral de la face optique et une deuxième position dans laquelle la rampe de nettoyage est placée à l'aplomb d'un second bord latéral de la face optique,
- la rampe de nettoyage est mobile en pivotement autour d'un axe de pivotement,
- la rampe de nettoyage est portée par au moins un bras de manoeuvre,
- le bras de manoeuvre est mû par un organe de manoeuvre,
- le système de détection comprend une platine porteuse de l'organe de manoeuvre et du détecteur laser,
- la rampe de nettoyage est pourvue d'au moins une buse de projection d'au moins un fluide, au moins une des buses étant agencée de manière à projeter le fluide selon une direction de projection formant un angle compris entre -15° et +15° et différent de 0°, par rapport à une direction normale à la face optique, mesurée au point de contact sur la face optique d'un jet formé par la buse,
- la rampe de nettoyage est pourvue d'une pluralité de buses de projection d'un premier fluide et/ou d'un deuxième fluide distinct du premier fluide,
- le premier fluide est un liquide de nettoyage et le deuxième fluide est un mélange de gaz, notamment de l'air,
- le système de détection peut comprendre un carter qui entoure le détecteur laser,
- avantageusement, le carter comprend l'organe de guidage, notamment lorsque le chemin de came est ménagé sur ou dans une paroi du carter et/ou lorsque la paroi courbée est formée par une arête d'une paroi du carter.

L'invention porte également sur un procédé de mise en oeuvre d'un système de détection défini ci-dessus, où une première étape consiste en un déplacement du dispositif de nettoyage, notamment la rampe de nettoyage, depuis une première position vers une deuxième position en projetant un premier fluide. Selon une deuxième étape, un déplacement de la rampe de nettoyage depuis la deuxième position vers la première position est prévu, en projetant un deuxième fluide distinct du premier fluide.

Ces dispositions sont telles qu'un système de détection de la présente invention est apte à recueillir des informations sur un environnement du véhicule automobile, d'une manière pérenne, y compris en cas de projections de salissures sur le système de détection, par enlèvement de ces salissures au moyen du dispositif de nettoyage de la présente invention.

D'autres caractéristiques, détails et avantages de l'invention ressortiront plus clairement à la lecture de la description donnée ci-après à titre indicatif en relation avec des dessins dans lesquels :
- la figure 1 est une vue schématique en perspective d'un système de détection sur lequel se monte un dispositif de nettoyage de la présente invention,
- la figure 2 est une vue en perspective du système de détection illustré sur la figure précédente, équipé du dispositif de nettoyage de la présente invention,
- la figure 3 est une vue de dessus du système de détection et du dispositif de nettoyage illustrés sur la figure 2,
- la figure 4 est une vue schématique de détail du dispositif de nettoyage illustré sur les figures 2 et 3,
- la figure 5 est une vue schématique de détail et de dessus du dispositif de nettoyage illustré sur les figures 2 à 4,
- la figure 6 est une vue en perspective du système de détection équipé de son dispositif de nettoyage,
- la figure 7 est une vue selon une autre perspective du système de détection équipé de son dispositif de nettoyage.

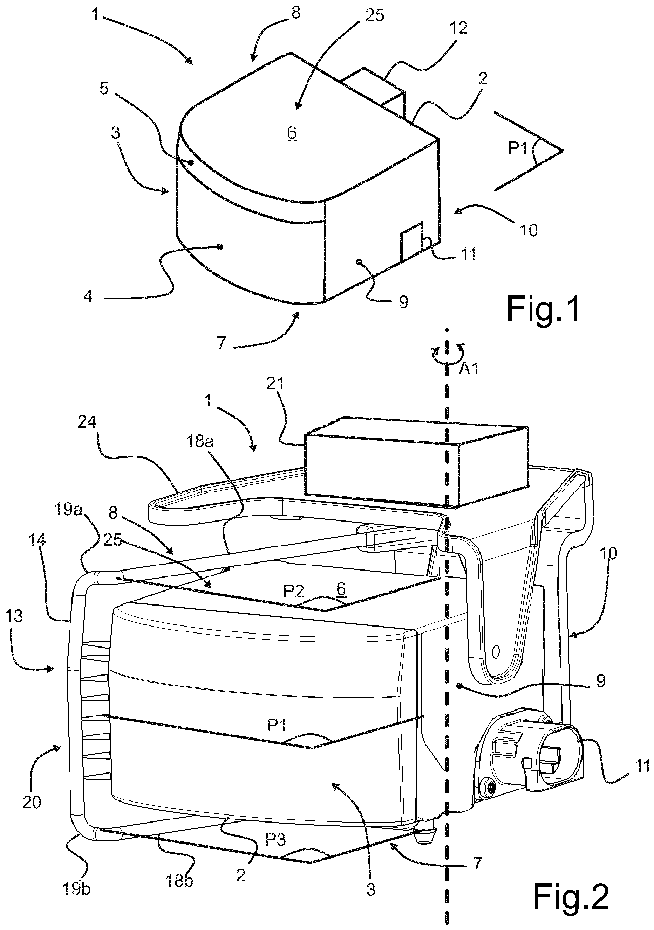

Sur la figure 1, un système de détection 1 pouvant être monté sur un véhicule automobile est illustré de manière schématique. Le système de détection est apte à recueillir des informations sur un environnement du véhicule automobile. Ce système de détection 1 comprend au moins un détecteur laser 25 délimité par une face optique 3. Cette face optique 3 est celle qui est traversée par les signaux optiques émis et reçus par le détecteur laser 25. Ce détecteur laser 25 est encore délimité par un boîtier 2 qui est par exemple globalement parallélépipédique. Le boîtier 2 est fermé par la face optique 3 à travers laquelle le signal optique est émis et/ou reçu. A cet effet, et comme illustré sur la figure 1, la face optique 3 comprend une portion émettrice 4 à travers laquelle un signal optique sortant est émis et une portion réceptrice 5 à travers laquelle un signal optique entrant est reçu. Le signal optique entrant est par exemple formé du signal optique sortant qui est renvoyé par l'environnement. Dans ce cas, le système de détection 1 peut par exemple comprendre le détecteur laser 25, tel qu'un laser lidar ou analogue.

La face optique 3 présente un profil courbé. La portion émettrice 4 et la portion réceptrice 5 peuvent suivre une génératrice commune, formant ainsi facialement une seule et même surface. Dans un tel cas, la portion émettrice 4 et la portion réceptrice 5 forment une face optique 3 continue. De manière alternative et tel que représenté sur les figures, la portion émettrice 4 et la portion réceptrice 5 peuvent suivre chacune une génératrice distincte et concourante, formant ainsi facialement la face optique 3 avec un premier bandeau et un second bandeau légèrement incliné par rapport au premier bandeau. On notera également que la surface de la portion émettrice 4 est supérieure à la surface de la portion réceptrice 5.

De préférence, la portion émettrice 4 et la portion réceptrice 5 forment conjointement la face optique 3 sur un côté du boîtier 2, en étant disposées l'une au-dessus de l'autre. La portion émettrice 5 surplombe par exemple la portion réceptrice 4. Selon la variante illustrée, la portion émettrice 4 et la portion réceptrice 5 sont conformées en une portion d'un même cylindre et présentent donc une section circulaire prise dans un plan radial P₁. Selon une autre variante, la portion émettrice 4 et la portion réceptrice 5 sont conformées en une portion d'un même ellipsoïde et présentent donc une section elliptique prise dans un plan radial P₁. Selon encore une autre variante, la portion émettrice 4 et la portion réceptrice 5 sont planes et coplanaires. Outre la face optique 3 qui forme une face avant du boîtier 2, et dans le cas où le boîtier est globalement parallélépipédique tel qu'illustré sur la figure 1, le boîtier 2 comprend une face supérieure 6 et une face inférieure 7 qui sont notamment parallèles l'une à l'autre, la face supérieure 6 surplombant la face inférieure 7 selon une direction verticale. Le boîtier 2 est encore délimité par au moins une face latérale gauche 8 et une face latérale droite 9 qui sont par exemple parallèles l'une à l'autre et orthogonales aux faces supérieure 6 et inférieure 7. Enfin, le boîtier 2 comprend une face arrière 10 qui est ménagée en vis-à-vis de la face optique 3 et qui est par exemple orthogonale aux faces supérieure 6, inférieure 7, latérale gauche 8 et latérale droite 9.

Le boîtier 2 est équipé d'un organe de connexion 11 à une unité centrale de contrôle qui est à même de gérer l'émission et/ou la réception du signal optique, et d'une manière générale toute information de gestion du système de détection 1. Le boîtier 2 est également pourvu d'un organe de fixation 12 du système de détection 1 à une platine ou à un élément structurel du véhicule automobile. L'élément structurel est indifféremment un parechoc avant, une calandre, un rétroviseur, un toit ou tout autre élément de carrosserie du véhicule automobile.

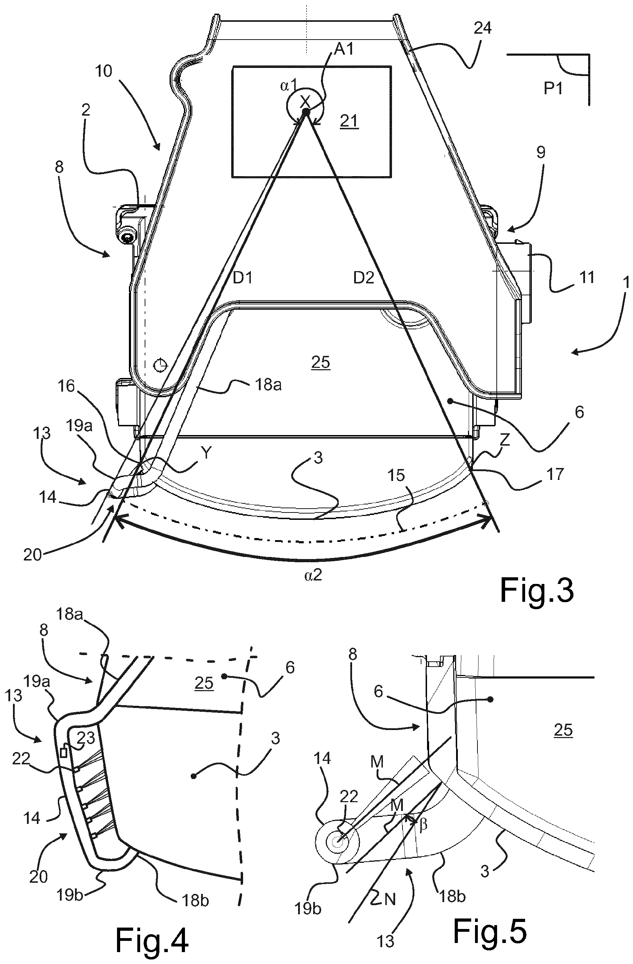

Sur les figures 2 à 5, le système de détection 1 est équipé d'un dispositif de nettoyage 13 de la face optique 3. Le dispositif de nettoyage 13 comprend une rampe de nettoyage 14 qui est mobile le long d'un chemin 15, illustré en trait pointillé sur la figure 3. Ce chemin 15, illustrant le déplacement de la rampe de nettoyage 14, est ménagé en vis-à-vis de la face optique 3. Le chemin 15 est notamment parallèle à la face optique 3. De manière plus précise, le chemin 15 est par exemple encore homothétique à la face optique 3. Ainsi, quand la face optique 3 suit un profil courbé, le chemin 15 suit une courbe de rayon supérieure à la courbe formant support de la face optique 3, les deux courbes partageant un même centre X.

Le chemin 15 s'étend par exemple entre un premier bord latéral 16 situé par exemple à l'intersection de la face latérale gauche 8 et de la face optique 3, et un second bord latéral 17 situé à l'intersection de la face latérale droite 9 et de la face optique 3. Le chemin 15 est avantageusement un chemin circulaire parallèle à une surface cylindrique dans laquelle s'inscrit la face optique 3, tel qu'illustré sur la figure 3.

La rampe de nettoyage 14 est portée par au moins un bras de manoeuvre 18a, 18b de la rampe de nettoyage 14. De préférence et tel qu'illustrée sur la figure 2, la rampe de nettoyage 14 est portée par deux bras de manoeuvre 18a, 18b, une première extrémité 19a de la rampe de nettoyage 14 étant reliée à un premier bras de manoeuvre 18a et une deuxième extrémité 19b de la rampe de nettoyage 14 étant reliée à un deuxième bras de manoeuvre 18b. Les bras de manoeuvre 18a, 18b sont notamment parallèles entre eux et orthogonaux à la rampe de nettoyage 14. Les bras de manoeuvre 18a, 18b sont notamment encore parallèles au plan radial P₁. En position monté sur le véhicule, le premier bras de manoeuvre 18a est par exemple un bras supérieur qui surplombe la face supérieure 6 tandis que le deuxième bras de manoeuvre 18b est un bras inférieur qui est placé sous la face inférieure 7. Autrement dit, les bras de manoeuvre 18a, 18b sont disposés de part et d'autre du système de détection 1.

La rampe de nettoyage 14 et les bras de manoeuvre 18a, 18b forment conjointement un organe de nettoyage 20 qui est agencé en un « U » la rampe de nettoyage 14 formant la base du « U » tandis que les bras de manoeuvre 18a, 18b forment les branches parallèles du « U ». Au moins un bras de manoeuvre 18a ou 18b est en relation fluidique avec la rampe de nettoyage 14. Le liquide de lavage que la rampe de nettoyage 14 projette sur la face optique 3 est ainsi transporté par l'un ou l'autre des bras, et avantageusement par les deux. La section des bras de manoeuvre 18a, 18b, ainsi que la section de la rampe de nettoyage 14, peut être cylindrique, notamment carré ou circulaire.

Au moins un des bras de manoeuvre 18a, 18b est en relation avec un organe de manoeuvre 21 tel qu'un actionneur électrique, un actionneur hydraulique ou analogue, qui est apte à faire pivoter les bras de manoeuvre 18a, 18b autour d'un axe de pivotement A₁ de manière à ce que le premier bras de manoeuvre 18a effectue un mouvement de pivotement à l'intérieur d'un plan supérieur P₂ et de manière à ce que le deuxième bras de manoeuvre effectue un mouvement de pivotement à l'intérieur d'un plan inférieur P₃, le plan supérieur P₂ et le plan inférieur P₃ étant parallèles au plan radial P₁.

L'axe de pivotement A₁ relie par exemple les deux extrémités libres des bras de manoeuvre 18a, 18b. Les bras de manoeuvre 18a, 18b sont d'une même longueur prise entre l'axe de pivotement A₁ la première extrémité 19a pour le premier bras de manoeuvre 18a, et la deuxième extrémité 19b pour le deuxième bras de manoeuvre 18b. L'axe de pivotement A₁ est préférentiellement orthogonal au plan radial P₁. L'axe de pivotement A₁ est notamment un axe de révolution de la face optique 3 et du chemin 15. Un tel mouvement de pivotement provoque un déplacement de la rampe de nettoyage 14 à l'intérieur dudit chemin 15.

Une platine 24 forme un support commun à l'actionneur 21 et au détecteur laser 25. Une telle platine 24 sert également de moyen de fixation de l'ensemble formé par le détecteur laser 25, l'organe de nettoyage 20 et l'actionneur 21, c'est-à-dire le système de détection 1, sur le véhicule qui le reçoit.

Ces dispositions sont telles que la rampe de nettoyage 14 est mobile en pivotement entre une première position dans laquelle la rampe de nettoyage 14 est placée en surplomb du premier bord latéral 16 et une deuxième position dans laquelle la rampe de nettoyage 14 est placée à l'aplomb du second bord latéral 17. Autrement dit, la rampe de nettoyage 14 circule à l'intérieur du chemin 15 au fur et à mesure du pivotement des bras de manoeuvre 18a, 18b autour de l'axe de pivotement A₁.

De préférence, lorsque la rampe de nettoyage 14 est placée dans la première position, telle qu'illustrée sur la figure 3, la rampe de nettoyage 14 est placée à l'intérieur d'un premier secteur angulaire α1 qui est complémentaire à un deuxième secteur angulaire α2. Ce deuxième secteur angulaire α2 et ce premier secteur angulaire α1 sont tous deux délimités d'une part, par une première droite D₁ passant par l'axe de pivotement A₁ et un premier point Y du premier bord latéral 16, et, d'autre part par une deuxième droite D₂ passant l'axe de pivotement A₁ et un deuxième point Z du second bord latéral 17, le premier point Y et le deuxième point Z étant pris dans un même plan parallèle au plan radial P₁. Autrement dit, en première position la rampe de nettoyage 14 est placée hors du deuxième secteur angulaire α2. Ces dispositions sont telles qu'en première position, la rampe de nettoyage 14 ne constitue pas un obstacle pour l'émission et/ou la réception du signal optique. Le deuxième secteur angulaire α2 définit un angle d'ouverture dans un plan horizontal d'émission et de réception du détecteur laser 25.

On notera encore sur la figure 3 que la rampe de nettoyage 14, dans sa première position dite de repos, est située dans le premier secteur angulaire α1 alors que au moins le premier bras de manoeuvre 18a, et avantageusement le deuxième bras de manoeuvre 18b, s'étendent dans le deuxième secteur angulaire α2. La rampe de nettoyage 14 est ainsi reliée au premier bras 18a par deux coudes, dont au moins un forme un angle droit. Une telle disposition permet de conserver un encombrement réduit quand la rampe de nettoyage 14 est en première position.

Sur les figures 4 et 5, la rampe de nettoyage 14 est pourvue d'une pluralité de buses 22 de projection d'au moins un fluide sous pression vers la face optique 3, de manière à nettoyer cette dernière en ôtant d'éventuelles salissures déposées sur la face optique 3. Les buses 22 sont agencées de manière à projeter le fluide selon une direction de projection M formant un angle β compris entre - 15° et +15° par rapport à une direction normale N à la face optique 3. De manière avantageuse, l'angle β est strictement différent de 0° de sorte que la direction de projection M ne soit pas orthogonale au plan de la face optique 3, à l'endroit où le jet de fluide touche la face optique 3. Cet angle β est encore par exemple égal à 5°, ou 10°. Ces dispositions visent à faciliter un décollement des salissures de la face optique 3 en formant un jet de fluide incliné par rapport à la surface de la face optique 3.

Les buses 22 sont par exemple formées par des trous ménagés dans la rampe de nettoyage 14. Alternativement, les buses 22 peuvent être des têtes de projection rapportées sur la rampe de nettoyage 14.

Selon une variante de réalisation, l'organe de nettoyage 20 comprend des éléments tubulaires formant réserve du ou des fluides préalablement à leur projection par l'intermédiaire des buses 22. Un premier fluide est par exemple un liquide de nettoyage tandis qu'un deuxième fluide est par exemple un fluide de séchage de la face optique 3, tel que de l'air. L'organe de nettoyage 20 est par exemple équipé de moyens de chauffage 23 pour éviter un gel du premier fluide. Les moyens de chauffage 23 sont par exemple des résistances électriques ou analogues. Par ailleurs, pour faciliter une évacuation du premier fluide de la face optique 3, cette dernière est notamment traitée par recouvrement d'un film en matière hydrophobe ou analogue.

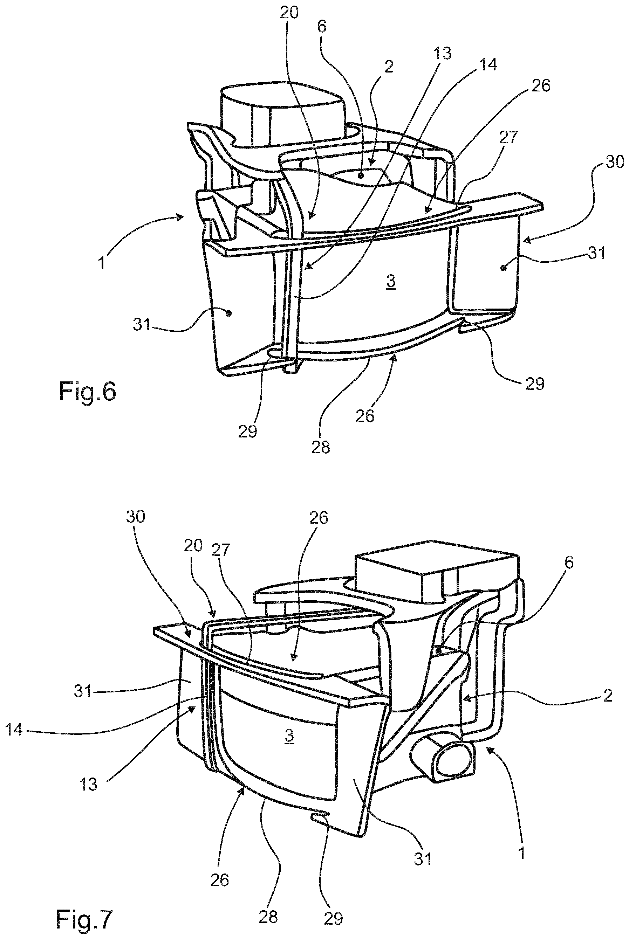

Les figures 6 et 7 montrent le système de détection 1 équipé de son dispositif de nettoyage 2 de la face optique 3, éventuellement de son organe de nettoyage 20. De manière additionnelle, le système de détection 1 comprend au moins un organe de guidage 26 du dispositif de nettoyage 2. Un tel organe de guidage assure un positionnement précis de la rampe de nettoyage 14 par rapport à la face optique 3. Cet organe de guidage 26 présente une étendue identique au chemin 15, exposé en figure 3.

L'organe de guidage 26 s'étend dans un plan parallèle au plan supérieur P2, au voisinage immédiat de la face supérieure 6 du boîtier 2. L'invention couvre également le cas où le système de détection 1 comprend une pluralité d'organes de guidage 26, notamment deux organes de guidage 26 dont une premier organe de guidage est ménagé au voisinage direct de la face supérieure 6 du boîtier et un deuxième organe de guidage est ménagé au voisinage direct de la face inférieure 7 du boîtier 2. Une telle organisation permet de renforcer la tenue de la rampe de nettoyage 14 pendant son mouvement le long du chemin 15.

Selon un exemple de réalisation, l'organe de guidage 26 prend la forme d'un chemin de came 27. C'est notamment le cas du premier organe de guidage illustré sur les figures 6 et 7. Alternativement, cet organe de guidage 26 peut prendre la forme d'une paroi courbée 28 contre laquelle la rampe de nettoyage 14 frotte pendant son déplacement le long du chemin 15. L'une et ou l'autre des extrémités de cette paroi courbée 28 peut être conformée en zone de blocage 29 de la rampe de nettoyage 14 lorsque celle-ci atteint sa première position ou sa deuxième position. Cette zone de blocage 29 forme un crochet qui englobe la rampe de nettoyage. Le deuxième organe de guidage peut prendre la forme de paroi courbée 28 exposée ci-dessus.

Bien entendu, l'invention peut comporter un unique organe de guidage 26, ou deux organes de guidage réalisés chacun sous la forme d'un chemin de came 27, ou un chemin de came 27 et une paroi courbée 28 comme illustré au figures 6 et 7, ou enfin deux parois courbés 28.

L'organe de guidage 26 est ménagé sur ou dans un carter 30. Un tel carter 30 entoure le boîtier 2 du détecteur laser, en s'étendant par exemple le long des faces supérieure et inférieure 6, 7 du boîtier 2. Avantageusement, le carter 30 s'étend également le long des faces latérales 8 et 9 de ce même boîtier 2. Le carter 30 forme donc une enveloppe qui entoure le boîtier 2 du détecteur laser 25. Le carter 30 étant néanmoins ajouré sur l'avant de sorte à exposer la face optique 3.

De manière optionnelle, le carter 30 comprend au moins une joue 31 qui s'étend sensiblement dans le prolongement latéral de la face optique 3 ou perpendiculairement à celle-ci. Le carter peut bien entendu comporter une pluralité de joues, notamment deux joues 31 entre lesquels s'étend la face optique 3. L'une des joues 31 qui s'étend perpendiculairement à la face optique 3 est la paroi du carter 30 dans laquelle est ménagé l'organe de guidage 26 décrit ci-dessus, notamment le chemin de came 27.

Le carter 30 forme avantageusement un masque ou cache qui assure une continuité de surface avec la pièce destinée à recevoir le système de détection 1, tout en laissant un jeu latéral facilitant le montage du dispositif de détection 1 sur la pièce. Un tel carter 30 est une pièce en matériau polymère et elle est enfilée sur le boîtier 2 du détecteur laser.

L'ensemble de ces dispositions est tel que la rampe de nettoyage 14 est apte à projeter le premier fluide contre la face optique 3 pour ôter les salissures déposées sur cette dernière lors d'un mouvement de la rampe de nettoyage 14 depuis la première position vers la deuxième position. L'ensemble de ces dispositions est également tel que la rampe de nettoyage 14 est apte à projeter le deuxième fluide contre la face optique 3 pour sécher la face optique 3 en ôtant le premier fluide lors d'un mouvement de la rampe de nettoyage 14 depuis la deuxième position vers la première position de la rampe de nettoyage 14, tel que présenté ci-dessus.

Aussi, un procédé de la présente invention comprend au moins une séquence comprenant une pluralité d'étapes dont une première étape comportant un déplacement de la rampe de nettoyage 14 depuis la première position vers la deuxième position en projetant le premier fluide et une deuxième étape comportant un déplacement de la rampe de nettoyage 14 depuis la deuxième position vers la première position en projetant le deuxième fluide. Selon une variante, le procédé comporte une pluralité de telles séquences. En d'autres termes, le procédé comprend une première étape de nettoyage et une deuxième étape de séchage. Avantageusement, l'étape de nettoyage est opérée pendant un déplacement de la rampe de nettoyage 14 entre la première position et la deuxième position, l'étape de séchage intervenant pendant un mouvement de retour de la rampe de nettoyage, c'est-à-dire un mouvement à partir de la deuxième position vers la première position.

Accessoirement, le procédé comprend une étape préalable qui consiste à remplir en premier fluide et en deuxième fluide les éléments tubulaires de l'organe de nettoyage 20.

## Revendications

1. Système de détection (1) destiné à équiper un véhicule automobile, le système de détection (1) comprenant au moins un détecteur laser (25) délimité par au moins une face optique (3), le système de détection (1) comprenant au moins un dispositif de nettoyage (2) de la face optique (3), le dispositif de nettoyage (2) comprenant une rampe de nettoyage (14) mobile le long d'un chemin (15) disposé au moins en vis-à-vis de la face optique (3), le système de détection comprenant en outre au moins un organe de guidage du dispositif de nettoyage de la face optique (3), **caractérisé en ce que** cet organe de guidage (26) est un chemin de came (27) et/ou une paroi courbée (28).

2. Système de détection (1) selon la revendication 1, dans lequel le chemin (15) forme une surface parallèle à la face optique (3).

3. Système de détection selon la revendication 2, dans lequel le chemin (15) forme une surface homothétique à la face optique (3).

4. Système de détection (1) selon l'une quelconque des revendications 1 à 3, dans lequel la face optique (3) est délimitée par un deuxième secteur angulaire (α2), la rampe de nettoyage (14) étant mobile entre une première position et une deuxième position, au moins la première position étant située dans un premier secteur angulaire (α1) complémentaire du deuxième secteur angulaire (α2).

5. Système de détection (1) selon la revendication 4, dans lequel la rampe de nettoyage (14) est mobile en pivotement autour d'un axe de pivotement (A₁).

6. Système de détection (1) selon l'une quelconque des revendications 1 à 5, dans lequel la rampe de nettoyage (14) est portée par au moins un bras de manoeuvre (18a, 18b).

7. Système de détection (1) selon la revendication 6, dans lequel le bras de manoeuvre (18a, 18b) est mu par un organe de manoeuvre (21).

8. Système de détection selon la revendication 7, comprenant une platine (24) porteuse de l'organe de manoeuvre (21) et du détecteur laser (25).

9. Système de détection (1) selon l'une quelconque des revendications 1 à 8, dans lequel la rampe de nettoyage (14) est pourvue d'au moine une buse (22) de projection d'au moins un fluide, au moins une des buses (22) étant agencée de manière à projeter le fluide selon une direction de projection (M) formant un angle (β) compris entre -15° et +15° et différent de 0°, par rapport à une direction normale (N) à la face optique (3).

10. Système de détection (1) selon l'une quelconque des revendication 8 et 9, dans lequel la rampe de nettoyage (14) est pourvue d'une pluralité de buses (22) de projection d'un premier fluide et/ou d'un deuxième fluide distinct du premier fluide.

11. Système de détection (1) selon la revendication 10, dans lequel le premier fluide est un liquide de nettoyage et le deuxième fluide est un mélange de gaz, notamment de l'air.

12. Système de détection (1) selon l'une quelconque des revendications précédentes, comprenant un carter (30) qui entoure le détecteur laser (25).

13. Système de détection (1) selon l'une quelconque des revendications 1 à 11 en combinaison avec la revendication 12, dans lequel le carter (30) comprend l'organe de guidage (26).

14. Procédé de mise en oeuvre d'un système de détection (1) défini par l'une quelconque des revendications précédentes, où une première étape consiste en un déplacement du dispositif de nettoyage (2) depuis une première position vers une deuxième position en projetant un premier fluide.

15. Procédé selon la revendication 14, **caractérisé en ce qu'**une deuxième étape consiste en un déplacement de la rampe de nettoyage (14) depuis la deuxième position vers la première position en projetant un deuxième fluide distinct du premier fluide.

## Patentansprüche

1. Detektionssystem (1), das dazu bestimmt ist, ein Kraftfahrzeug auszustatten, wobei das Detektionssystem (1) mindestens einen Laserdetektor (25) umfasst, der von mindestens einer optischen Fläche (3) begrenzt ist, wobei das Detektionssystem (1) mindestens eine Reinigungsvorrichtung (2) der optischen Fläche (3) umfasst, wobei die Reinigungsvorrichtung (2) eine Reinigungsrampe (14) umfasst, die entlang eines Weges (15) beweglich ist, der zumindest gegenüber der optischen Fläche (3) angeordnet ist, wobei das Detektionssystem ferner mindestens ein Führungselement der Reinigungsvorrichtung der optischen Fläche (3) umfasst, **dadurch gekennzeichnet, dass** das Führungselement (26) eine Kurvenbahn (27) und/oder eine gekrümmte Wand (28) ist.

2. Detektionssystem (1) nach Anspruch 1, bei dem der Weg (15) eine Fläche parallel zur optischen Fläche (3) bildet.

3. Detektionssystem nach Anspruch 2, bei dem der Weg (15) eine homothetische Fläche zur optischen Fläche (3) bildet.

4. Detektionssystem (1) nach einem der Ansprüche 1 bis 3, bei dem die optische Fläche (3) durch einen zweiten Winkelsektor (α2) begrenzt ist, wobei die Reinigungsrampe (14) zwischen einer ersten Position und einer zweiten Position beweglich ist, wobei mindestens die erste Position in einem ersten Winkelsektor (α1) komplementär zum zweiten Winkelsektor (α2) angeordnet ist.

5. Detektionssystem (1) nach Anspruch 4, bei dem die Reinigungsrampe (14) schwenkbar um eine Schwenkachse (A₁) beweglich ist.

6. Detektionssystem (1) nach einem der Ansprüche 1 bis 5, bei dem die Reinigungsrampe (14) von mindestens einem Betätigungsarm (18a, 18b) getragen wird.

7. Detektionssystem (1) nach Anspruch 6, bei dem der Betätigungsarm (18a, 18b) von einem Betätigungselement (21) bewegt wird.

8. Detektionssystem nach Anspruch 7, umfassend eine Platine (24), die das Betätigungselement (21) und den Laserdetektor (25) trägt.

9. Detektionssystem (1) nach einem der Ansprüche 1 bis 8, bei dem die Reinigungsrampe (14) mit mindestens einer Düse (22) zum Aufspritzen mindestens eines Fluids versehen ist, wobei mindestens eine der Düsen (22) derart angeordnet ist, dass sie das Fluid in eine Spritzrichtung (M) aufspritzt, die einen Winkel (β) zwischen -15° und +15° und ungleich 0° in Bezug zu einer Normalrichtung (N) auf die optischen Fläche (3) bildet.

10. Detektionssystem (1) nach einem der Ansprüche 8 und 9, bei dem die Reinigungsrampe (14) mit einer Vielzahl von Düsen (22) zum Aufspritzen eines ersten Fluids und/oder eines zweiten Fluids, das sich von dem ersten Fluid unterscheidet, versehen ist.

11. Detektionssystem (1) nach Anspruch 10, bei dem das erste Fluid eine Reinigungsflüssigkeit und das zweite Fluid ein Gasgemisch, insbesondere Luft, ist.

12. Detektionssystem (1) nach einem der vorhergehenden Ansprüche, umfassend ein Gehäuse (30), das den Laserdetektor (25) umgibt.

13. Detektionssystem (1) nach einem der Ansprüche 1 bis 11 in Kombination mit Anspruch 12, bei dem das Gehäuse (30) das Führungselement (26) umfasst.

14. Verfahren zum Einsatz eines Detektionssystems (1), das durch einen der vorhergehenden Ansprüche definiert ist, bei dem ein erster Schritt in einer Verlagerung der Reinigungsvorrichtung (2) von einer ersten Position in eine zweite Position unter Aufspritzen eines ersten Fluids besteht.

15. Verfahren nach Anspruch 14, **dadurch gekennzeichnet, dass** ein zweiter Schritt in einer Verlagerung der Reinigungsrampe (14) von der zweiten Position in die erste Position unter Aufspritzen eines zweiten Fluids, das sich vom ersten Fluid unterscheidet, besteht.

## Claims

1. Detection system (1) intended to equip a motor vehicle, the detection system (1) comprising at least one laser detector (25) delimited by at least one optical face (3), the detection system (1) comprising at least one cleaning device (2) for cleaning the optical face (3), the cleaning device (2) comprising a cleaning spray boom (14) able to move along a path (15) arranged at least facing the optical face (3), the detection system further comprising at least one guide member guiding the device that cleans the optical face (3), **characterized in that** this guide member (26) is a camway (27) and/or a curved wall (28).

2. Detection system (1) according to Claim 1, in which the path (15) forms a surface parallel to the optical face (3).

3. Detection system according to Claim 2, in which the path (15) forms a surface homothetic with the optical face (3).

4. Detection system (1) according to any one of Claims 1 to 3, in which the optical face (3) is delimited by a second angular sector (α2), the cleaning spray boom (14) being able to move between a first position and a second position, at least the first position being situated in a first angular sector (α1) complementary to the second angular sector (α2).

5. Detection system (1) according to Claim 4, in which the cleaning spray boom (14) is capable of a pivoting movement about an axis of pivoting (A₁).

6. Detection system (1) according to any one of Claims 1 to 5, in which the cleaning spray boom (14) is borne by at least one operating arm (18a, 18b).

7. Detection system (1) according to Claim 6, in which the operating arm (18a, 18b) is moved by an operating member (21).

8. Detection system (1) according to Claim 7, comprising a mounting plate (24) bearing the operating member (21) and the laser detector (25).

9. Detection system (1) according to any one of Claims 1 to 8, in which the cleaning spray boom (14) is provided with at least one nozzle (22) for spraying at least one fluid, at least one of the nozzles (22) being arranged in such a way as to spray the fluid in a direction of spraying (M) that makes an angle (β) comprised between -15° and +15° and different from 0°, with respect to a direction (N) normal to the optical face (3).

10. Detection system (1) according to either one of Claims 8 and 9, in which the cleaning spray boom (14) is provided with a plurality of nozzles (22) for spraying a first fluid and/or a second fluid distinct from the first fluid.

11. Detection system (1) according to Claim 10, in which the first fluid is a cleaning liquid and the second fluid is a mixture of gas, notably air.

12. Detection system (1) according to any one of the preceding claims, comprising a casing (30) which surrounds the laser detector (25).

13. Detection system (1) according to any one of Claims 1 to 11 in combination with Claim 12, in which the casing (30) comprises the guide member (26) .

14. Method for implementing a detection system (1) defined by any one of the preceding claims, in which a first step consists in a movement of the cleaning device (2) from a first position towards a second position while spraying a first fluid.

15. Method according to Claim 14, **characterized in that** a second step consists in a movement of the cleaning spray boom (14) from the second position towards the first position while spraying a second fluid distinct from the first fluid.
